**Europäisches Patentamt**

(19) **European Patent Office**

**Office européen des brevets**

(11) Veröffentlichungsnummer: **0 064 166**
**B1**

(12) ## EUROPÄISCHE PATENTSCHRIFT

(45) Veröffentlichungstag der Patentschrift:
**12.03.86**

(51) Int. Cl.⁴: **F 16 B 13/06**

(21) Anmeldenummer: **82102952.7**

(22) Anmeldetag: **06.04.82**

(54) **Spreizhülse für Bauwerksteile.**

(30) Priorität: **28.04.81 DE 3116850**

(43) Veröffentlichungstag der Anmeldung:
**10.11.82 Patentblatt 82/45**

(45) Bekanntmachung des Hinweises auf die Patenterteilung:
**12.03.86 Patentblatt 86/11**

(84) Benannte Vertragsstaaten:
**AT BE CH FR GB IT LI NL SE**

(56) Entgegenhaltungen:
**AT - B - 317 502**
**CH - A - 436 856**
**DE - A - 1 750 492**
**DE - A - 2 251 109**
**DE - A - 2 632 487**
**DE - A - 2 643 154**
**DE - B - 2 423 433**
**DE - C - 193 478**
**DE - C - 561 942**
**DE - U - 7 424 831**
**DE - U - 7 712 996**
**FR - A - 2 054 713**
**GB - A - 1 349 142**
**US - A - 1 688 087**
**US - A - 1 940 856**

(73) Patentinhaber: **HILTI Aktiengesellschaft,**
**FL-9494 Schaan (LI)**

(72) Erfinder: **Mirsberger, Helmut, Friedrich List-Strasse 118,**
**D-8000 München 70 (DE)**
Erfinder: **Lang, Gusztav, Dr., Dipl.-Ing., Dr.**
**Böttcher-Strasse 26, D-8000 München 60 (DE)**
Erfinder: **Bisping, Heinz, Feichtmayrstrasse 15,**
**D-8000 München 50 (DE)**

(74) Vertreter: **Wildi, Roland, Hilti Aktiengesellschaft**
**Patentabteilung, FL-9490 Schaan (LI)**

ACTORUM AG

**Beschreibung**

Die Erfindung betrifft eine unter axialer Stauchung radial spreizbare Spreizhülse für Bauwerksteile mit umlaufenden Wulsten bzw. Rippen, die zumindest längs eines Teils der axialen Länge aneinander gereiht sind.

Im Bauwesen finden unterschiedlichste Materialien zur Herstellung von Wänden und dergleichen Bauwerksteilen Anwendung. Vermehrt werden auch druckempfindliche Materialien, wie Gasbeton, dünnwandige Hohlziegel oder Platten aus gepresstem Fasermaterial eingesetzt.

Auf den aus diesen Materialien hergestellten Bauwerksteilen müssen bekanntlich verschiedenste Gegenstände, wie bspw. Isoliermaterial, befestigt werden. Hierzu sind Befestigungselemente bekannt, die grösstenteils zu deren Verankerung in eine entsprechende Bohrung des Bauwerksteiles eingeführt werden. Wie die Praxis zeigt, führt das Verankern dieser bekannten Befestigungselemente einerseits aufgrund unterschiedlichsten Konstruktiven Aufbaues sowie unterschiedlicher Dicken der Bauwerksteile und andererseits zufolge unterschiedlicher Festigkeiten des Materials der Bauwerksteile zu fortwährenden Problemen; es werden also teils brauchbare und teils unbrauchbare Verankerungen erzielt.

Ein aus der DE-A-2 525 275 bekanntes Befestigungselement ist als aus einem Netzwerk bestehende Spreizhülse ausgebildet. Nach dem Einführen derselben in eine vorgefertigte zylindrische Bohrung des Bauwerksteiles wird diese mittels einer Schraube axial gestaucht. Eine Stauchung kommt jedoch nur in dem das Bauwerksteil hinterseitig überragenden Abschnitt der Spreizhülse zustande und führt hier zu einer ballonartigen Aufweitung desselben. Diese Erweiterung schafft eine formschlüssige Abschulterung der Spreizhülse an der den hinterseitigen Auslauf der Bohrung umgebenende Randzone des Bauwerksteiles.

Bei Bauwerksteilen aus druckempfindlichem Material führt das Abschultern der ballonartigen Aufweitung zu einer spezifischen Überbeanspruchung der besagten Randzone und damit vielfach zu einem Ausbrechen derselben, oftmals sogar zu einem Bruch der gesamten Befestigungszone. Die Ursache dieses Problems liegt darin, dass die ballonartige Aufweitung aufgrund deren förmlicher Ausbildung sich nur unter Linienberührung abstützt.

Auch beim Einsatz dieser bekannten Spreizhülse in druckunempfindlichem Material führt diese Art der Abstützung zu Problemen, indem die in der Regel scharfkantige Randzone des Bauwerksteiles die aus Netzwerk bestehende Spreizhülse an deren Auflagestelle überbeansprucht und so beschädigt.

Eine unter axialer Stauchung radial spreizbare Spreizhülse für Bauwerksteile der angegebenen Gattung ist aus der GB-A-1 349 142 bekannt und weist umlaufende Rippen auf, die wenigstens längs eines Teils der axialen Länge der Spreizhülse aneinander gereiht sind. Dabei wird die Spreizhülse aus einem durchgehend wendelförmig aufgewickelten Band gebildet. Die Wendelgänge bilden so eine kegelige Innen- und Aussenkontur, an der sich die Wendelgänge gegenseitig abstützen. Zum radialen Aufweiten der Spreizhülse greift an den in Setzrichtung vorderen Wendelgängen eine Spreizschraube an, über die die Wendelgänge gegeneinander gezogen werden.

Dabei sind aufgrund des gegenseitigen Verschiebens der Wendelgänge über die kegelige Aussen- und Innenkontur hohe Zugkräfte zu überwinden. Eine Folge hiervon ist, dass gerade in weichen und druckempfindlichen Bauwerksteilen ein «gefühlvolles» Verspreizen zur Erzielung maximaler Verankerungswerte nicht möglich ist. Zudem ist auch die Stelle, an der die Aufspreizung der Spreizhülse beginnt, weitgehend unbestimmt. Ausserdem besteht bei dieser Spreizhülse die Gefahr, dass sie bei unsachgemässer Handhabung axial etwas gestreckt wird und sich dadurch die Wendelgänge gegenseitig überlappen. Sehr oft wird dann diese gestreckte Spreizhülse unbrauchbar, da die Wendelgänge nicht mehr in Überlappung gebracht werden können, wie es für das sichere zuverlässige Setzen erforderlich ist.

Der Erfindung liegt deshalb die Aufgabe zugrunde, eine universell einsetzbare Spreizhülse der angegebenen Gattung zu schaffen, die sich durch kompakten Aufbau, kleine Spreizkräfte und eine definierte Verankerung auszeichnet.

Dies wird erfindungsgemäss dadurch erreicht, dass sich die Aussenkontur der balgartigen Wulste bzw. Rippen unter axialer Verkürzung erweitert, und dass der Teilungsabstand der balgartigen Wulste bzw. Rippen von einem Ende zum anderen Ende zunimmt.

Zweckmässige Ausgestaltungen sind in den Unteransprüchen zusammengestellt.

Die mit der Erfindung erzielten Vorteile beruhen auf folgender Funktionsweise: Wird eine solche Spreizhülse in eine Bohrung des Bauwerksteils eingeführt und anschliessend mittels einer Ankerstange axial gestaucht, so kommt es durch die Verringerung der Länge der balgartigen Wulste zu ihrer radialen Aufweitung. Jene Wulste, die über die Bohrung bzw. die von der Bohrung durchsetzten, tragenden Zonen der Bauwerksteile hinaus in den freien Raum ragen oder etwa in Kammern eines Hohlziegels liegen, sind in ihrer Spreizbarkeit durch die Bohrung nicht begrenzt und lassen sich so auf die konstruktiv vorgegebene, maximale radiale Weite spreizen. Dabei legen sich diese aneinander benachbarten, maximal gespreizten Wulste mit ihren Wandungen direkt aneinander und kommen so als kompaktes Paket in Anlage an die hintere Seite des Bauwerksteiles bzw. gegebenenfalls einer oder mehrere Rippen eines Hohlziegels. Die im Bohrloch liegenden Wulste legen sich kraftschlüssig an die Bohrungswandung an und schaffen so eine radiale Führung für die Ankerstange.

Je nach materialmässiger oder konstruktiver Beschaffenheit des Bauwerksteils ist die Spreizhülse zweckmässig mit dem einen bzw. mit dem anderen Ende voraus in die Bohrung einzuführen. Bei Bauwerksteilen aus druckempfindlichem Material bricht bei der Herstellung einer Durchgangsbohrung erfahrungsgemäss die das Bohrungstiefste umgebende Randzone kraterförmig aus. Zur Erzielung einer möglichst grossflächigen Abstützung der Wulste am Bauwerksteil wird diesfalls die Spreizhülse mit dem Hülsenende mit grossem Teilungsabstand der Wulste bzw. Rippen voraus eingeführt. Die die Bohrung überragenden, maximal spreizbaren Wulste formen so einen kompakten Kegelkörper, dessen Kegelfläche sich im ausgebrochenen Krater des Bauwerksteiles abstützt, so dass keine spezifischen Überbeanspruchungen auftreten. Handelt es sich bei dem Bauteil hingegen um druckunempfindliches Material, wie bspw. Steinzeugplatten oder Blechtafeln, so tritt im Bohrungstiefsten ein kraterförmiges Ausbrechen nicht auf. Die Spreizhülse ist diesfalls in umgekehrter Richtung in die Bohrung einzuführen. Dadurch wird sichergestellt, dass die über die Bohrung hinausragenden Wulste in gestauchtem bzw. gespreiztem Zustand eine grosse plane Anlagefläche bilden, so dass eine allenfalls scharfkantige Randzone am Auslauf der Bohrung die Spreizhülse nicht zu beschädigen vermag.

Zweckmässig erstrecken sich die Wulste bzw. Rippen über die gesamte Länge der Spreizhülse. Sie können dabei als einzelne sich schliessende Ringe ausgebildet sein. Ebenso können diese aber auch einen schraubenlinienartig zusammenhängenden Verlauf aufweisen. In entlang der Hülsenlängsachse verlaufender Schnittebene weisen die Wulste mit Vorteil Kreisbogen oder Dachform auf.

Die Ankerstange zum Stauchen der Spreizhülse kann als Zugstange ausgebildet sein, die mittels eines Hilfsgerätes zurückgezogen wird. In herstellungs- und handhabungsmässiger Hinsicht ist es von Vorteil, die Zugstange form- oder stoffschlüssig einstückig mit dem einführrichtungsseitigen Ende der Spreizhülse zu verbinden. Ferner sollte die Zugstange Arretiermittel zum Festlegen derselben in zurückgezogener d.h. gespannter Position der Spreizhülse aufweisen. Hierzu eignen sich bspw. Rastverzahnungen, die entweder mit dem entgegen der Einführrichtung weisenden Hülsenende oder bspw. mit dem zu befestigenden Gegenstand selbst verrastbar sind. Anstelle eines Zuggliedes ist es aber auch möglich, als Ankerstange eine Schraube zu verwenden, die mit ihrem Gewinde oder mit ihrem Kopf am einführrichtungsseitigen Hülsenende angreift.

Um eine noch grossflächigere Abstützung durch die Wulste, welche die Bohrung in Einführrichtung überragen, zu erreichen, wird mit zunehmendem Teilungsabstand der Durchmesser der Wulste bzw. Rippen vorzugsweise grösser. Die Scheitel der Wulste bzw. Rippen beschreiben dabei zweckmässig eine Kegelkontur.

Von Vorteil ist es, wenn die beim Spannen der Ankerstange aufgebrachten Kräfte zu einem möglichst hohen Teil als Verankerungskräfte wirksam werden. Voraussetzung hierzu ist, dass das Verformen der Wulste bzw. Rippen unter möglichst kleinem Kraftaufwand erfolgt. Dies wird nach einem weiteren Vorschlag der Erfindung durch eine abnehmende Wandungsdicke der Wulste zu deren Scheitel hin erreicht.

Der Kraftaufwand für das Verformen der Spreizhülse lässt sich mit Vorteil auch durch Einschnitte am Scheitel der Wulste weiter bzw. noch weiter herabsetzen. Die Einschnitte können bspw. als Kerben oder Längsschnitte ausgebildet und in gleichmässigem Winkelabstand auf der Umfangskontur der Scheitel angeordnet sein. Beim Stauchen der Spreizhülse platzen die Wulste aufgrund der dabei auftretenden Spannungen an den durch die Einschnitte erzielten Schwächungsstellen definiert auf; die Spreizhülse bzw. die Wulste können sich so radial stark erweitern.

Die Erfindung wird nachstehend anhand einer Zeichnung die ein Ausführungsbeispiel zeigt, näher erläutert. Es zeigen die

Fig. 1 eine Spreizhülse in ungespreiztem Zustand, im Längsschnitt,

Fig. 2 die Spreizhülse nach Fig. 1 mit einer Zugstange, in gespreiztem Zustand, bei hintergreifender Montage,

Fig. 3 die Spreizhülse nach Fig. 1, mit einer Schraube, in gespreiztem Zustand, bei hintergreifender Montage.

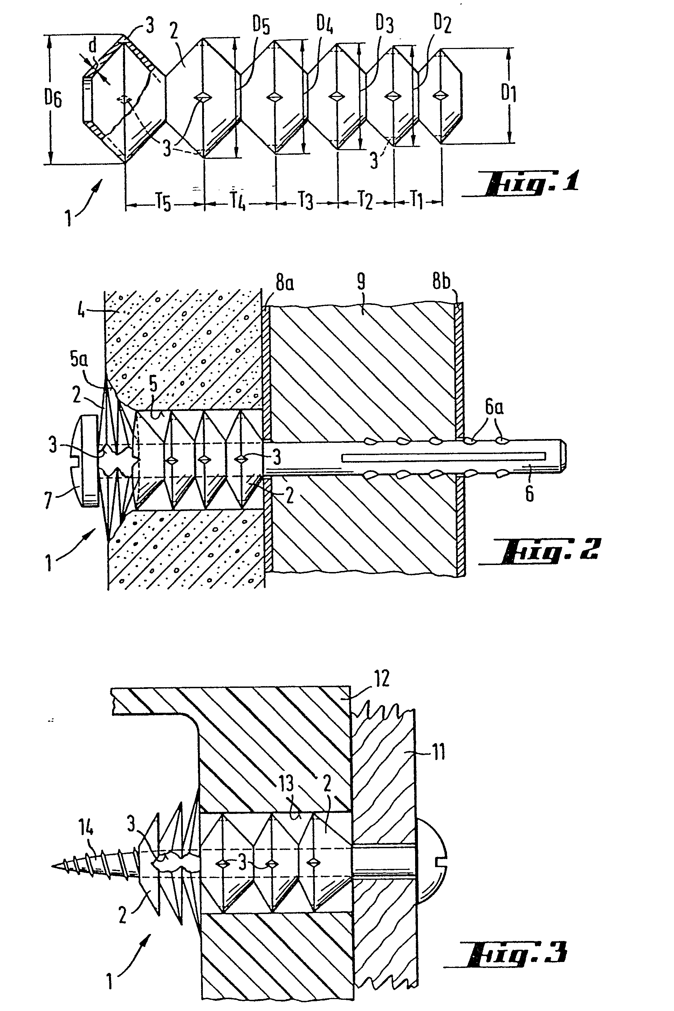

Die in Fig. 1 gezeigte, gesamthaft mit 1 bezeichnete Spreizhülse setzt sich aus einstückig aneinandergereihten Wulsten 2 zusammen, deren jeder im Längsschnitt der Spreizhülse eine dachförmige Kontur aufweist. Die Wandungsdicke d der Wulste 2 nimmt zum Scheitel der Wulste hin ab. Der Scheitel jedes Wulstes 2 weist kerbenförmige Einschnitte 3 auf, um das Spreizen der Hülse 1 definiert zu begünstigen. Der Teilungsabstand $T_1 \ldots T_5$ zwischen den Wulsten 2 nimmt vom einen zum anderen Hülsenende hin zu. Entsprechend der Zunahme des Teilungsabstandes $T_1 \ldots T_5$ vergrössert sich auch der Durchmesser $D_1 \ldots D_6$ der Wulste 2.

Je nach Verankerungsbedingung bzw. Beschaffenheit des Bauwerksteiles, in welchem die Spreizhülse 1 verankert werden soll, wird diese mit dem durch die grösseren Teilungsabstände gekennzeichneten oder mit dem durch die kleineren Teilungsabstände hin gekennzeichneten Ende voraus in die Bohrung des Bauwerksteiles eingeführt. Da die Wulste 2 einen zum einen Ende der Spreizhülse 1 hin grösser werdenden Durchmesser $D_1 \ldots D_6$ aufweisen, ist es zum Erleichtern des Einführens zweckmässig, die Spreizhülse 1 für den Einführvorgang axial zu dehnen. Dadurch nehmen die grösseren Wulste 2 vorübergehend den Durchmesser des kleinsten Wulstes an.

Die Fig. 2 zeigt den Einsatz der Spreizhülse 1 in einem Bauwerksteil 4 aus bruch- bzw. druckempfindlichem Material, wie bspw. Gasbeton. Beim Herstellen einer Bohrung 5 ist deren auslaufseitige Umgebungszone des Bauwerksteiles 4 ausgebrochen, so dass ein Krater 5a entstanden ist. Die Spreizhülse 1 mit einer diese durchragenden Zugstange 6, deren Kopf 7 das einführrichtungsseitige Hülsenende unterfasst, ist in die Bohrung 5 eingeführt, wobei einige Wulste 2 die Bohrung 5 bzw. das Bauwerksteil 4 hinterseitig überragen.

Eine auf die Oberseite des Bauwerksteiles 4 aufgelegte gelochte Isolierwand, mit ober- und unterseitigen Abdeckblechen 8a, 8b und einer zwischengelegten Isolierschicht 9, wird von der Zugstange 6 durchragt. Durch Zurückziehen der Zugstange 6 wurde über deren Kopf 7 die Spreizhülse 1 vom überragenden Ende her axial gestaucht, wobei sich das gegenüberliegende Ende der Spreizhülse 1 am einen Abdeckblech 8a abstützt. Aufgrund der axialen Stauchung der Wulste 2 spreizen diese radial auf, was durch Platzen derselben an den Einschnitten 3 begünstigt wird. Die überragenden Wulste 2 haben sich mit deren Wandungen direkt aneinandergelegt und bilden so einen sich im Krater 5a mit der Mantelfläche grossflächig abstützenden kompakten Abstützkegel. Die in der Bohrung 5 liegenden Wulste 2 legen sich an der Bohrungswandung an und tragen so zur Erhöhung des Verankerungswertes der Spreizhülse 1 sowie zur seitlichen Führung der Zugstange 6 bei. Die Zugstange 6 überragt die Isolierwand und stützt sich zur Beibehaltung der Spreizposition über Rastzähne 6a am oberseitigen Abdeckblech 8b ab. Dadurch wird auch die Isolierwand festgelegt.

Einen anderen Einsatzfall für die Spreizhülse 1 zeigt die Figur 3. Hier gilt es, eine Holzleiste 11 an einem Bauwerksteil 12 festzulegen, wobei das Bauwerksteil bspw. aus Kunststoff besteht. Zur Aufnahme der Spreizhülse 1 ist im Bauwerksteil 12 eine Bohrung 13 vorgesehen, die aufgrund des bruchunempfindlichen Materials des Bauwerksteils endseitig nicht ausgebrochen ist.

Diesfalls wird die Spreizhülse 1 mit dem durch kleinen Teilungsabstand gekennzeichneten Ende voraus in die Bohrung 13 eingeführt. Das anschliessende axiale Stauchen der Spreizhülse 1 erfolgt mittels einer Holzschraube 14, die am einführrichtungsseitig letzten Wulst 2 angreift.

Wie im Einsatzfall gemäss Fig. 2 legen sich die aus der Bohrung 13 ragenden Wulste 2 an der Rückseite des Bauwerksteiles 12 an. Von diesen Wulsten 2 kommt jeweils der am weitesten spreizbare in Anlage am Bauwerksteil 12, wodurch eine grossflächige, plane und damit sichere Abstützung zustande kommt.

## Patentansprüche

1. Unter axialer Stauchung spreizbare Spreizhülse (1) für bauwerksteile mit umlaufenden Wulsten bzw. Rippen (2), die zumindest längs eines Teils der axialen Länge aneinander gereiht sind, dadurch gekennzeichnet, dass sich die Aussenkontur der balgartigen Wulste bzw. Rippen (2) unter axialer Verkürzung erweitert, und dass der Teilungsabstand ($T_1 \ldots T_5$) der balgartigen Wulste bzw. Rippen (2) von einem Ende zum anderen Ende zunimmt.

2. Spreizhülse nach Anspruch 1, dadurch gekennzeichnet, dass mit zunehmenden Teilungsabstand ($T_1 \ldots T_5$) der Durchmesser ($D_1 \ldots D_6$) der balgartigen Wulste bzw. Rippen (2) grösser wird.

3. Spreizhülse nach einem der Ansprüche 1 oder 2, dadurch gekennzeichnet, dass die Wandungsdicke (d) der balgartigen Wulste bzw. Rippen (2) zu ihrem Scheitel hin abnimmt.

4. Spreizhülse nach einem der Ansprüche 1 bis 3, dadurch gekennzeichnet, dass der Scheitel der balgartigen Wulste bzw. Rippen (2) mit Einschnitten (3) versehen ist.

## Claims

1. An expansible sleeve (1), which can be expanded by axial compression, for structural parts having encircling beads or respectively ribs (2) which are ranged side-by-side at least along a part of its axial length, characterised in that the outer contour of the bellows-like beads or respectively ribs (2) widens upon axial shortening, and in that the spacing ($T_1 \ldots T_5$) between adjacent bellows-like beads or respectively ribs (2) increases from one end to the other end.

2. An expansible sleeve according to claim 1, characterised in that with increasing spacing ($T_1 \ldots T_5$) therebetween the diameter ($D_1 \ldots D_6$) of the bellows-like beads or respectively ribs (2) becomes larger.

3. An expansible sleeve according to one of claims 1 or 2, characterised in that the wall thickness (d) of the bellows-like beads or respectively ribs (2) decreases towards their apex.

4. An expansible sleeve according to one of claims 1 to 3, characterised in that the apex of the bellows-like beads or respectively ribs (2) is provided with incisions (3).

## Revendications

1. Cheville à expansion (1) pour éléments de construction, expansible radialement par refoulement axial, présentant des bourrelets ou nervures périphériques (2) alignés sur au moins une partie de la longueur axiale, caractérisée en ce que le contour extérieur des bourrelets ou nervures formant soufflets d'élargit par raccourcissement axial et que les écartements ($T_1 \ldots T_5$) entre les bourrelets ou nervures (2) formant soufflets augmente d'une extrémité à l'autre.

2. Cheville à expansion selon la revendication 1, caractérisée en ce que le diamètre ($D_1 \ldots D_6$) des bourrelets ou nervures (2) formant soufflets s'accroît avec l'augmentation des écartements ($T_1 \ldots T_5$).

3. Cheville à expansion selon l'une des revendications 1 ou 2, caractérisée en ce que l'épaisseur de la paroi (d) des bourrelets ou nervures (2) formant soufflets décroît vers leur sommet.

4. Cheville à expansion selon l'une des revendications 1 à 3, caractérisée en ce que les sommets des bourrelets ou nervures (2) formant soufflets sont munis d'entailles (3).

*Fig. 1*

*Fig. 2*

*Fig. 3*